Europäisches Patentamt

(19) European Patent Office

Office européen des brevets

(11) Veröffentlichungsnummer: **0 036 911**
**B1**

(12) **EUROPÄISCHE PATENTSCHRIFT**

(45) Veröffentlichungstag der Patentschrift: **07.08.85**

(21) Anmeldenummer: **80200286.5**

(22) Anmeldetag: **28.03.80**

(51) Int. Cl.⁴: **H 02 K 3/40**

(54) **Stabwicklung mit verdrillten Teilleitern für eine elektrische Maschine mit Nennspannungen grösser als 3,3 kV und Verfahren zur Herstellung der Stabwicklung.**

(43) Veröffentlichungstag der Anmeldung:
**07.10.81 Patentblatt 81/40**

(45) Bekanntmachung des Hinweises auf
die Patenterteilung:
**07.08.85 Patentblatt 85/32**

(84) Benannte Vertragsstaaten:
**AT CH DE FR GB IT SE**

(56) Entgegenhaltungen:
**DE-A-1 903 545**
**DE-A-2 740 544**
**DE-A-2 755 050**
**FR-A-1 099 790**
**FR-A-2 293 816**
**GB-A- 600 907**
**US-A-3 066 180**

(73) Patentinhaber: **BBC Aktiengesellschaft Brown,
Boveri & Cie.
Haselstrasse
CH-5401 Baden (CH)**

(72) Erfinder: **Liptàk, Gabor
Im Eichtal 4
CH-5400 Baden AG (CH)**
Erfinder: **Schuler, Roland
Aehrenweg 7
CH-5430 Wettingen AG (CH)**

Courier Press, Leamington Spa, England.

**Beschreibung**

Die vorliegende Erfindung bezieht sich auf eine Stabwicklung gemäss dem Oberbegriff des Anspruchs 1 und auf ein Verfahren zur Herstellung der Stabwicklung.

In der CH—PS 579 844 ist eine Stabwicklung beschrieben und dargestellt, die aus verdrillten isolierten Volleitern und blanken Hohlleitern besteht. Die durch die Verdrillung der Teilleiter verursachten Unebenheiten auf den Schmalseiten der Stabwicklung sind mit Kunstharzglimmerkitt ausgefüllt und die Schmalseiten mit einem elektrisch leitenden Streifen abgedeckt, wobei dieser Streifen mit den blanken Teilleitern elektrisch verbunden ist. Dieser elektrisch leitende Streifen ist ungefähr 0,5 mm dick und ist mittels eines elektrisch leitenden Kunstharzklebers auf die Teilleiter geklebt oder nur aufgepresst. Es werden jedoch auch Stabwicklungen verwendet, bei welchen alle Teilleiter isoliert sind. Für die Verbindung des elektrisch leitenden Streifens mit den Einzelleitern muss man die Isolierschicht entfernen. Die elektrisch leitenden Streifen, die als Innenglimmschutz dienen, sind nicht in beliebigen Längen erhältlich. Der Innenglimmschutz muss deshalb für lange Stableiter aus mehreren Streifen zusammengestzt werden, wobei die Streifen an den zu verbindenden Enden abgeschrägt überlappt und leitend verklebt werden, was ausser einer minimalen Streifendicke noch einen zusätzlichen Aufwand erfordert.

Aus der DE—AI—2 755 050 ist ist eine Stabwicklung gemäß dem Oberbegriff des Anspruchs mit verdrillten Teilleitern, ausgefüllten Unebenheiten auf den Schmalseiten der Stabwicklung und einem Innenglimmschutz bekannt, welcher aus einem auf den Wicklungsstab aufgewickelten Glimmschutzband besteht. Für den Innenglimmschutz ist ein Material vorgesehen, dessen Dicke z.B. weniger als 0,15 mm beträgt. Der Innenglimmschutz ist beispielsweise nur an einer einzigen Stelle, vorzugsweise in der Stabmitte, über ohmige Ankopplungselemente mit einer blank gemachten Stelle des darunterliegenden Leiterbündels verbunden. Eine andere Form der ohmigen Ankopplung wird dadurch erreicht, dass bei der Qualitätskontrolle des fertigisolierten Roebelstabes durch Spannungsbeanspruchung die ursprünglich kapazitive Anlenkung durch den sich bildenden Durchschlagskanal in eine ohmige umgewandelt wird. Nach den Erkenntnissen der Anmelderin ist mit dem beim Bekannten vorgesehenen Aufbau und Anordnung des Innenglimmschutzes eine zuverlässige und definierte Ankopplung des Innenglimmschutzes an das darunterliegende Teilleiterbündel insbesondere bei grösseren Stablängen nicht gewährleistet. Zudem können Schwachstellen an den Stabbreitseiten zu unerwünschten, weil den tan δ des roebelstabes verschlechternden, Anlenkungen führen.

Der Erfindung, wie sie in den Patentansprüchen gekennzeichnet ist, liegt die Aufgabe zugrunde, die Stabwicklung so auszubilden, dass einerseits nicht nur ein einfacher, material- und kostensparender Innenglimmschutz erreicht wird, sondern dass andererseits auch der Innenglimmschutz an wohldefinierten Stellen über die gesamte Stablänge zuverlässig wirkt.

Aufgrund eingehender Untersuchungen hat es sich erwiesen, dass durch die erfindungsgemässe Ausbildung des Innenglimmschutzes der tan δ der fertigisolierten Stabwicklung praktisch nicht verschlechtert wird, die Innenglimmschutzstreifen jedoch genügend eng an die Teilleiter angekoppelt sind, dass in eventuell vorhandenen Hohlräumen zwischen Inneglimmschutzstreifen und Teilleiteroberfläche keine Glimmentladungen auftreten und somit die elektrische Lebensdauer der Isolation günstig beeinflusst wird.

Durch die Unterteilung der Glimmschutzstreifen in Stablängsrichtung erreicht man nicht nur eine vereinfachte Fertigung, da komplizierte und aufwendige Verbindungsstellen der einzelnen Glimmschutzstreifen untereinander entfallen, sondern auch ein gleichmässige Verteilung der Anlenkungen in Stablängsrichtung, weil jeder einzelne Streifen mindestens einmal an das unter ihm liegende Leiterbündel angekoppelt ist.

Der Anspruch 4 zeigt eine vorteilhafte Dimensionierung des Abstandes zwischen den Enden in Stablängsrichtung aufeinanderfolgender Innenglimmschutzstreifen, bei welcher die Innenglimmschutzwirkung noch ausreichend gesichert ist. Auf diese Weise ist es zudem möglich, die minimale Anzahl Ankopplungselemente in Stablängsrichtung festzulegen, da pro Streifen mindestens eine Ankopplungsstelle entsteht. Die Ausgestaltung der Stabwicklung nach Anspruch 5 beinhaltet eine zweckmässige Verteilung der Haftung der Innenglimmschutzstreifen, welche in bevorzugter Weise durch nur stellenweise Verklebung der Innenglimmschutzstreifen mit dem Leiterbündel realisiert werden kann.

Das erfindungsgemässe Verfahren zur Herstellung der Stabwicklung gemäss Anspruch 6 weist den Vorteil auf, dass die Innenglimmschutzstreifen eine bleibende elektrisch leitende Verbindung mit den Teilleitern erfahren, und zwar ohne Verwendung von elektrisch leitendem Klebstoff und ohne Entfernung der Teilleiterisolation an den betreffenden Stellen. Diese elektrisch leitenden Verbindungen verteilen sich über die gesamte Teilleiterisolation unter den Innenglimmschutzstreifen und stellen an den elektrisch schwächsten Stellen punktuell eine hochohmige Verbindung zwischen diesem und den Teilleitern des darunterliegenden Leiterbündels her.

Die Innenglimmschutzstreifen bestehen vorzugsweise aus glasfaserverstärkten, mit Russ oder Graphit gefüllten Kunstharzlaminaten. Sie schirmen als Potentialbelag die unter ihnen liegenden Unebenheiten auch in dem Fall elektrisch ab, wenn die Ausfüllung ungenügend ist. Als Ausfüllmaterial verwendet man z.B. Kunstharzglimmerkitte.

Durch die in Anspruch 7 angegebene nur stellenweise Verklebung wird bewusst die Haftung des bzw. der Glimmschutzstreifen am Teilleiterbündel schlechter als zwischen Glimmschutzstreifen und Hauptisolation. Durch thermische und mechanische Einflüsse bedingte Ablösungserscheinungen beeinträchtigen somit nur die Haftung zwischen Innenglimmschutzstreifen und Leiterbündel, nicht hingegen die Haftung zwischen Innenglimmschutz und Hauptisolation.

Die Einfachheit und Wirtschaftlichkeit der Erfindung ermöglicht deren Verwendung bei allen Wicklungen mit Roebelstäben oder vergleichbaren Anordnungen, bei welchen bischer—meist aus Kostengründen—kein Innenglimmschutz verwendet werden konnte, was zu einer generellen Qualitätsverbesserung der Wicklungen führt.

Die Erfindung wird nachfolgend an Hand schematischer Zeichnungen näher erläutert.

In der Zeichnung zeigt

Fig. 1 einen Querschnitt durch eine beispielsweise erfindungsgemässe Stabwicklung und

Fig. 2 den Schnitt II—II aus Fig. 1.

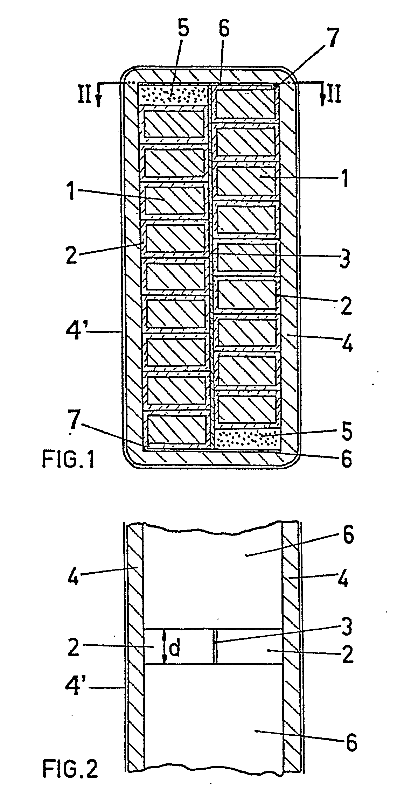

In Fig. 1 ist ein Roebelstab gezeigt. Mehrere Teilleiter 1 sind mit Teilleiterisolationen 2 versehen und durch eine Hälftenisolation (Schwert) 3 getrennt. Die verdrillten Teilleiter 1 sind mit einer Hauptisolation 4 umhüllt, welche ihrerseits von einem Aussenglimmschutzbelag 4' umgeben ist. Der in Fig. 1 gezeigte Querschnitt stellt eine Lage der Teilleiter 1 dar, wo der linke Teil gegenüber dem rechten Teil verschoben ist, so dass links oben und rechts unten Unebenheiten entstanden sind, die mit Ausfüllungen 5 gefüllt sind. Die Schmalseiten der verdrillten Teilleiter 1 sind mit Innenglimmschutzstreifen 6 abgedeckt. Hochohmige Ankopplungselemente 7 stellen die elektrische Verbindung zwischen dem Glimmschutzbelag 6 und den Teilleitern 1 her.

Fig. 2 zeigt den Schnitt II—II aus Fig. 1, der zwischen der oberen Fläche der Innenglimmschutzstreifen 6 und der unteren Oberfläche des oberen Teils der Hauptisolation 4 gelegt ist. Gleiche Teile sind in Fig. 2 mit denselben Bezugsziffern versehen wie in Fig. 1. In der Figur 2 ist eine Unterbrechung zwischen zwei Enden der Innenglimmschutzktreifen 6 gezeigt. Der Abstand d zwischen den Enden beträgt in diesem Beispiel etwa 3 mm, die Innenglimmschutzstreifen 6 bestehen aus glasfaserverstärkten, mit Russ oder Graphit gefüllten Kunstharzlaminaten und sind etwa 0,08 mm dick. Die Materialersparnis beträgt in diesem Beispiel in bezug auf die bisher übliche Dicke des Innenglimmschutzstreifens von etwa 0,5 mm mehr als 400%.

In Fig. 2 sind ferner schematisch die Stellen eingetragen, an denen die Ankopplungselement 7 gelgen sind.

Das erfindungsgemässe Verfahren wird nachfolgend beispeilhaft erläutert.

Vorisolierte Teilleiter 1, worunter sich auch Hohlleiter befinden können, sowie solche mit unterschiedlichem Querschnitt, werden in an sich bekannter Weise zu einem Leiterbündel mit verdrillten Teilleitern geformt und das Leiterbündel durch Druck und Wärme vorverfestigt. Auf die Schmalseiten des Leiterbündels werden Innenglimmschutzstreifen 6 mit einer Dicke von etwa 0,08 mm aufgelegt. anschliessend wird die Hauptisolation 4 aufgebracht. Das Imprägniermittel kann in dem Band enthalten sein, es kann während des Aufwickelns eingebracht werden oder die Wicklung wird nach dem Aufbringen der Hauptisolation mit dem Imprägniermittel getränkt. Abschliessend wird zumindest der Nutteil der Stabwickung mit einem Aussenglimmschutz versehen.

Durch Anlegen einer Wechselspannung, die um den Faktor 3 bis 4 höher ist als die Nennspannung der Wicklung zwischen die Teilleiter 1 und den Aussenglimmschutzbelag 4' bilden sich über die gesamte Stabschmalseite verteilte, mikroskopisch kleine Entladungskanäle zwischen den Glimmschutzstreifen 6 und den diesen Streifen benachbarten Teillertern aus. Sie bestehen, wie eingehende Untersuchungen ergeben haben, aus Reaktionsprodukten der Entladungen mit dem Isolationsmaterial der Teilleiter bzw. dem in dieses eingelagerten Imprägniermittels. Diese Kanäle bilden die Ankopplungselemente 7 zwischen Innenglimmschutzstreifen und Teilleitern. Bei Messspannungen um 100 Volt, also solchen im Bereich marktüblicher Ohmmeter, sind die Ankopplungselemente im Vergleich zum elektrischen Widerstand der Innenglimmschutzstreifen selbst hochohmig. Bei Prüfspannungen mit dreibis vierfacher Nennspannung der Gitterstäbe weisen die Ankopplungselemente einen elektrischen Widerstand auf, der in der Grössenordnung von einigen Ohm bis 100 Ohm liegt. Bei Betriebsbeanspruchung mit einer Höchstspannung um die Nennspannung liegt der elektrische Widerstand etwa in der Grössenordnung der Innenglimmschutzstreifen (0,1 kOhm bis 10 kOhm). Die Ankopplungselemente weisen somit eine spannungsabhängige Widerstandscharakteristik mit abnehmendem Widerstand bei steigender Spannung auf.

Aufgrund der geschilderten Eigenschaften der Ankopplungselemente beeinträchtigen diese die Isolationsqualität, insbesondere den dielektrischen Verlustfaktor praktisch nicht. Im Gegenteil wird durch die Schirmwirkung des Innenglimmschutzes die elektrische Lebensdauer des Isolationssystems entscheidend verlängert.

Bezeichnungsliste

1=Teilleiter

2=Teilleiterisolation

3=Hälftenisolation

4=Hauptisolation

4'=Aussenglimmschutzbelag

5=Ausfüllungen

6=Innenglimmschutzstreifen

7=Ankopplungselemente

d=Abstand zwischen den Enden von zwei Innenglimmschutzstreifen 6

## 0 036 911

### Patentansprüche

1. Stabwicklung mit verdrillten Teilleitern für eine elektrische Maschine mit Nennspannungen über 3,3 kVolt, wobei Unebenheiten auf den Schmalseiten des Leiterbündels ausgefüllt und das Leiterbündel mit einem höchstens 0,15 mm dicken Innenglimmschutz versehen ist, der lokal an die Teilleiter des Leiterbündels durch Entladungs Kanäle, die sich bei Anlegen einer gegenüber der Nennspannung überhöhten Spannung bilden, angekoppelt ist, dadurch gekennzeichnet, dass der Innenglimmschutz als nur auf die Schmalseite des Leiterbündels aufgebrachte Innenglimmschutzstreifen (6) ausgebildet ist, welche in Stablängsrichtung unterbrochen sind.

2. Stabwicklung nach Anspruch 1, dadurch gekennzeichnet, dass die elektrische Leitfähigkeit der Ankopplungselemente (7) bei Nennspannung annähernd derjenigen der Innenglimmschutzstreifen (6) entspricht.

3. Stabwicklung nach Anspruch 2, dadurch gekennzeichnet, dass die Ankopplungselemente (7) eine spannungsabhängige Widerstandscharakteristik aufweisen, derart, dass der Widerstand mit zunehmender Spannung zwischen dem Innenglimmschutzstreifen (6) und dem bzw. den Teilleiter(n) sinkt.

4. Stabwicklung nach einem der Ansprüche 1 bis 3, dadurch gekennzeichnet, dass der Abstand (d) zwischen zwei Enden der Innenglimmschutzstreifen (6) und somit die Unterbrechung 0,5 bis max. der Dicke der Hauptisolation (4) beträgt.

5. Stabwicklung nach einem der Ansprüche 1 bis 4, dadurch gekennzeichnet, dass die Haftung der Innenglimmschutzstreifen (6) an der Hauptisolation (4) stärker ist als am Leiterbündel.

6. Verfahren zur Herstellung einer Stabwicklung nach einem der Ansprüche 1 bis 5, dadurch gekennzeichnet, dass in stablängsrichtung unterbrochenen Innenglimmschutzstreifen (6) auf die Schmalseiten des aus verdrillten und isolierten Teilleitern (1) aufgebauten Leiterbündels vor oder nach dem Verfestigen des Leiterbündels aufgelegt werden, dass danach auf das Teilleiterbündel eine Hauptisolation (4) aufgebracht wird und dass zwischen die Oberfläche dieser Hauptisolation und die verdrillten Teilleiter (1) eine Wechselspannung angelegt wird, die 300 bis 400% Nennspannung der Stabwicklung entspricht, und dabei die elektrische Verbindung mit spannungsabhängiger Widerstandscharakteristik zwischen den Innenglimmschutzstreifen (6) und den Leitern (1) des Leiterbündels erzeugt wird.

7. Verfahren nach Anspruch 6, dadurch gekennzeichnet, dass die Innenglimmschutzstreifen (6) lediglich stellenweise mit der Teilleiterisolation (2) verklebt werden.

### Revendications

1. Enroulement à barre à conducteurs partiels transposés pour une machine électrique avec des tensions nominales supérieures à 3,3 kVolts, dans lequel des inégalités dans les côtés étroits du faisceau de conducteurs sont comblées et le faisceau de conducteurs est pourvu d'une protection antieffluves interne d'une épaisseur maximale de 0,15 mm, qui est couplée localement aux conducteurs partiels du faisceau de conducteurs par des canaux de décharge qui se forment lors de l'application d'une tension de valeur supérieure à la tension nominale, caractérisé en ce que la protection antieffluves interne a la forme de bandes antieffluves internes (6) appliquées uniquement sur le côté étroit du faisceau de conducteurs, ces bandes étant interrompues dans le sens longitudinal de la barre.

2. Enroulement à barre suivant la revendication 1, caractérisé en ce que la conductibilité électrique des éléments de couplage (7) correspond, pour la tension nominale, à peu près à celle des bandes antieffluves internes (6).

3. Enroulement à barre suivant la revendication 2, caractérisé en ce que les éléments de couplage (7) présentent une caractéristique de résistance dépendant de la tension de telle sorte que la résistance diminue à mesure qu'augmente la tension entre les bandes antieffluves internes (6) et le ou les conducteurs partiels.

4. Enroulement à barre suivant l'une quelconque des revendications 1 à 3, caractérisé en ce que la distance (d) entre deux extrémités des bandes antieffluves internes (6) et ainsi l'interruption est égale à une valeur allant de 0,5 jusqu'au maximum de l'épaisseur de l'isolation principale (4).

5. Enroulement à barre suivant l'une quelconque des revendications 1 à 4, caractérisé en ce que l'adhérence des bandes antieffluves internes (6) à l'isolation principale (4) est plus forte que leur adhérence au faisceau de conducteurs.

6. Procédé pour fabriquer un enroulement à barre suivant l'une quelconque des revendications 1 à 5, caractérisé en ce qu'on applique les bandes antieffluves internés (6), interrompues dans le sens longitudinal de la barre, sur les côtés étroits du faisceau de conducteurs formé de conducteurs partiels transposés et isolés (1) avant ou après la consolidation du faisceau de conducteurs, puis on place sur le faisceau de conducteurs partiels une isolation principale (4) et on applique, entre la surface de cette isolation principale et les conducteurs partiels transposés (1), une tension alternative qui correspond à 300 à 400% de la tension nominale de l'enroulement à barre et on produit ainsi la connexion électrique à caractéristique de résistance dépendant de la tension entre les bandes antieffluves internes (6) et les conducteurs (1) du faisceau de conducteurs.

7. Procédé suivant la revendication 6, caractérisé en ce que les bandes antieffluves internes (6) ne sont collées que par endroits à l'isolation (2) des conducteurs partiels.

**Claims**

1. Barwinding comprising twisted conductor elements, for an electric machine with rated voltages of over 3.3 kVolt, uneven places on the narrow sides of the group of conductors being filled and the group of conductors being provided with inner corona shielding which has a maximum thickness of 0.15 mm and which is locally coupled to the conductor elements of the group of conductors by means of discharge channels forming when a voltage is applied which is excessive with respect to the rated voltage, characterised in that the inner corona shielding is constructed as inner corona shielding strips (6) which are applied only to the narrow side of the group of conductors and which are interrupted in the longitudinal direction of the bar.

2. Barwinding according to Claim 1, characterised in that the electric conductivity of the coupling elements (7) at rated voltage corresponds approximately to that of the inner corona shielding strips (6).

3. Barwinding according to Claim 2, characterised in that the coupling elements (7) are provided with a voltage-dependent resistance characteristic, in such a manner that the resistance drops with increasing voltage between the inner corona shielding strip (6) and the conductor element or elements.

4. Barwinding according to one of Claims 1 to 3, characterised in that the distance (d) between two ends of the inner corona shielding strips (6), and thus the interruption, is 0.5 to the maximum of the thickness of the main insulation (4).

5. Barwinding according to one of Claims 1 to 4, characterised in that the adhesion of the inner corona shielding strip (6) to the main insulation (4) is stronger than to the group of conductors.

6. Method for producing a barwinding according to one of Claims 1 to 5, characterised in that the inner corona shielding strips (6), which are interrupted in the longitudinal direction of the bar, are placed onto the narrow sides of the group of conductors, which is built up of twisted and insulated conductor elements (1), before or after the group of conductors has been reinforced, that thereafter a main insulation (4) is applied to the group of conductor elements and that between the surface of this main insulation and the twisted conductor elements (1) an alternating voltage is applied which corresponds to 300 to 400% of the rated voltage of the barwinding, thus producing the electric connection, having a voltage-dependent resistance characteristic, between the inner corona shielding strips (6) and the conductors (1) of the group of conductors.

7. Method according to Claim 6, characterised in that the inner corona shielding strips (6) are bonded only in places to the conductor element insulation (2).

0 036 911

FIG.1

FIG.2